**Europäisches Patentamt**

**European Patent Office**

**Office européen des brevets**

(19)

(11) Veröffentlichungsnummer: **0 223 935**
**B1**

(12)

# EUROPÄISCHE PATENTSCHRIFT

(45) Veröffentlichungstag der Patentschrift:
**24.10.90**

(51) Int. Cl.5: **B60T 15/24**

(21) Anmeldenummer: **86112033.5**

(22) Anmeldetag: **29.08.86**

(54) **Zweikreisig ansteuerbares Bremsdruck-Steuerventil.**

(30) Priorität: **29.11.85 DE 3542175**

(43) Veröffentlichungstag der Anmeldung:
**03.06.87 Patentblatt 87/23**

(45) Bekanntmachung des Hinweises auf die Patenterteilung:
**24.10.90 Patentblatt 90/43**

(84) Benannte Vertragsstaaten:
**DE FR GB IT SE**

(56) Entgegenhaltungen:
**DE-A- 2 246 242**
**DE-A- 3 229 836**
**DE-A- 3 309 238**

(73) Patentinhaber: **WABCO Westinghouse Fahrzeugbremsen GmbH, Am Lindener Hafen 21 Postfach 91 12 80, D-3000 Hannover 91(DE)**

(72) Erfinder: **Ulrich, Helmut Ing. (grad.), Schiergrund 19, D-3257 Springe 1(DE)**

(74) Vertreter: **Schrödter, Manfred, WABCO Westinghouse Fahrzeugbremsen GmbH Am Lindener Hafen 21 Postfach 91 12 80, D-3000 Hannover 91(DE)**

## Beschreibung

Die Erfindung betrifft ein zweikreisig ansteuerbares Bremsdruck-Steuerventil für druckluftbetätigte Fahrzeugbremsanlagen, insbesondere Anhänger-Steuerventil, gemäß dem Oberbegriff des Patentanspruchs 1.

Anhänger-Steuerventile dienen zur Steuerung des Druckes einer Anhänger-Bremsanlage in Abhängigkeit vom Druck in der Bremsanlage des Motorfahrzeugs.

Die Drucksteuerung erfolgt in der Weise, daß die durch Betätigung des Motorwagen-Bremsventils in eine erste Steuerkammer des Anhänger-Steuerventils einströmende Druckluft einen mit einem kombinierten Einlaß- und Auslaßventil in Wirkverbindung stehenden Steuerkolben bewegt, wodurch zunächst ein Schließen des mit einem Entlüftungsanschluß in Verbindung stehenden Auslaßventils bewirkt wird. Bei der weiteren Bewegung des Steuerkolbens wird das zwischen einer Einlaßkammer und einer Arbeitskammer angeordnete Einlaßventil in die Offenstellung gebracht. Die von einem Druckluft-Vorratsbehälter gelieferte, in der Einlaßkammer anstehende Druckluft gelangt durch die Arbeitskammer sowie eine zu einem Anhänger-Bremsventil der Anhänger-Bremsanlage führende Druckmittelleitung in die Steuerkammer des Anhäger-Bremsventils. Wenn der vom Anhänger-Steuerventil ausgesteuerte Druck eine vom Steuerdruck und von den Wirkflächen des Steuerkolbens abhängige Höhe erreicht hat, wird der Steuerkolben vom Druck in der Arbeitskammer gegen den Steuerdruck bewegt und das Einlaßventil geschlossen. Das Anhänger-Steuerventil befindet sich in der Abschlußstellung.

Wird der Steuerdruck weggenommen, so überwiegt der auf den Steuerkolben einwirkende ausgesteuerte Druck und verschiebt den Steuerkolben, so daß das Auslaßventil öffnet und der Druck in der zum Anhänger-Bremsventil führenden Druckmittelleitung sowie der Druck in der Steuerkammer des nachgeschalteten Anhänger-Bremsventils über den Entlüftungsanschluß des Anhänger-Steuerventils abgebaut wird.

Um sicherzustellen, daß bei Ausfall eines Steuerkreises die Funktionsfähigkeit des Anhänger-Steuerventils erhalten bleibt, ist im Anhänger-Steuerventil ein zweiter Steuerkolben zur Betätigung des kombinierten Einlaß- und Auslaßventils vorgesehen, der eine von der ersten Steuerkammer getrennt angeordnete zweite Steuerkammer begrenzt, welche mit einem zweiten Bremskreis des Motorfahrzeugs verbunden ist. Zweckmäßigerweise sind der erste Steuerkolben und der zweite Steuerkolben so bemessen und derart im Anhänger-Steuerventil angeordnet, daß die Charakteristik des vom Anhänger-Steuerventil auszusteuernden Bremsdruckes auch bei Ausfall eines Bremskreises erhalten bleibt.

Aus der DE-OS 2 246 242 ist ein derartiges gattungsgemäßes, als Anhänger-Steuerventil dienendes Bremsdruck-Steuerventil bekannt. Dieses Anhänger-Steuerventil weist einen ersten Steuerkolben und einen zweiten Steuerkolben auf, wobei der zweite Steuerkolben relativ zum ersten Steuerkolben bewegbar ist, derart, daß die beiden Steuerkolben in Abhängigkeit von dem jeweils zugeordneten Steuerdruck jeweils in gleicher Richtung bewegbar sind. Der erste Steuerkolben begrenzt eine mit einem ersten Bremskreis eines Motorfahrzeugs verbundene erste Steuerkammer. Eine mit einem zweiten Bremskreis des Motorfahrzeugs verbundene als zweite Steuerkammer dienende Druckmittelkammer ist zwischen dem ersten Steuerkolben und dem als zweiter Steuerkolben dienenden Kolben angeordnet und wird von diesem begrenzt.

Der erste Steuerkolben und der zweite Steuerkolben sind hintereinanderliegend in einer Gehäuseausnehmung angeordnet und derart ausgebildet, daß ein Teil des zweiten Steuerkolbens sich teleskopartig in den ersten Steuerkolben hinein erstreckt. Die Abdichtung der ersten Steuerkammer gegen die zweite Steuerkammer erfolgt mittels zweier Dichtringe, die auf dem Umfang des ersten Steuerkolbens angeordnet sind. Die Abdichtung der zweiten Steuerkammer gegen eine Teilkammer, welche mit einer Arbeitskammer und damit mit dem Anhängerbremskreis verbindbar ist, erfolgt direkt mittels eines auf dem Umfang des zweiten Steuerkolbens vorgesehenen weiteren Dichtringes. Da beide Steuerkolben in ihrem den Dichtring bzw. in ihrem die Dichtringe tragenden Bereich den gleichen Außendurchmesser aufweisen und in der für beide Steuerkolben gemeinsamen Gehäuseausnehmung geführt werden, liegen die Dichtringe der beiden Steuerkolben an der diese Gehäuseausnehmung begrenzenden Wand des Gehäuses dichtend an.

Von Nachteil ist bei diesem bekannten Anhänger-Steuerventil, daß durch die hintereinanderliegende Anordnung der Steuerkolben im Dichtbereich der Raumbedarf für die Steuerkolben relativ groß ist.

Der Erfindung liegt deshalb die Aufgabe zugrunde, ein Bremsdruck-Steuerventil der eingangs erwähnten Art zu schaffen, welches einen raumsparenden einfachen Aufbau aufweist.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, mit einfachen Mitteln eine raumsparende Kolbenanordnung zu erhalten, welche zum einen gewährleistet, daß auch bei Ausfall eines Bremskreises die Charakteristik des vom Bremsdruck-Steuerventil ausgesteuerten Bremsdruckes erhalten bleibt und zum anderen sichergestellt ist, daß die als Steuerdrücke dienenden Drücke aus den beiden Bremskreisen sich nicht vermischen können.

Da die Undichtigkeiten an dem Dichtring zwischen dem ersten Steuerkolben und der Gehäusewand oder an dem Dichtring zwischen erstem Steuerkolben und dem zweiten Steuerkolben zum Druckanstieg in der als Hilfssteuerkammer dienenden Teilkammer führen, wodurch das Kräftegleichgewicht an dem oder den Steuerkolben gestört wird, gelangt das kombinierte Einlaß- und Auslaßventil in die Offenstellung des Auslaßventils. Die dabei auftretende Entlüftung läßt einen Defekt an dem Dichtring bzw. an den Dichtringen erkennen.

Ein weiterer Vorteil der Erfindung ist darin zu sehen, daß die erste Steuerkammer direkt gegen die Teilkammer, welche mit dem Anhänger-Bremskreis verbindbar bzw. verbunden ist, abgedichtet ist und auch die zweite Steuerkammer direkt gegen die Teilkammer, welche mit dem Anhängerbremskreis verbindbar bzw. verbunden ist, abgedichtet ist. Das heißt, beide Steuerkammern sind jeweils über das zugehörige Dichtelement unmittelbar gegenüber der Teilkammer abgedichtet.

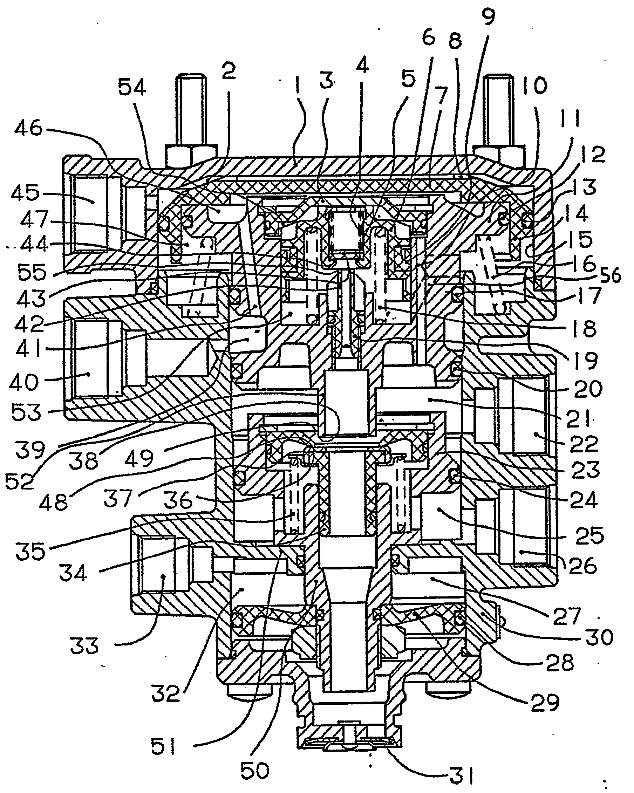

Anhand der Zeichnung wird nachstehend ein Ausführungsbeispiel der Erfindung näher erläutert.

Die Abbildung zeigt ein als Anhänger-Steuerventil dienendes Bremsdruck-Steuerventil mit einem ersten Steuerkolben und einem zweiten Steuerkolben, wobei die beiden Steuerkolben teleskopartig und relativ zueinander verschiebbar angeordnet sind.

Das Zweileitungs-Anhänger-Steuerventil besteht aus einem Gehäuseoberteil (1) und einem Gehäuseunterteil (30), an dessen Unterseite eine Entlüftung (31) angeordnet ist. Im oberen Gehäuseteil (1) ist ein vorzugsweise einstückig ausgebildeter topfförmiger erster Steuerkolben (7, 14) angeordnet. Die dem Innenraum des ersten Steuerkolbens (7, 14) abgewandte Seite des Bodens (7) des Steuerkolbens (7, 14) begrenzt eine erste Steuerkammer (2), welche über einen ersten Steueranschluß (45) z. B. mit einem ersten Bremskreis eines Motorfahrzeugs verbunden ist. Auf der Seite des Bodens (7) des Steuerkolbens (7, 14), welche der ersten Steuerkammer (2) zugewandt ist, ist eine umlaufende ringförmig ausgebildete Erhöhung (8) vorgesehen, welche als Distanzstück zwischen der Innenseite des Gehäuseoberteils (1) und dem Kolbenboden dient. Ein zweiter Steuerkolben (11) ist benachbart zum ersten Steuerkolben (7, 14) im Gehäuseoberteil (1) angeordnet. Der dem ersten Steuerkolben (7, 14) zugewandte Teil des zweiten Steuerkolbens (11) ist so bemessen und so zum ersten Steuerkolben (7, 14) angeordnet, daß der erste Steuerkolben (7, 14) und der zweite Steuerkolben (11) relativ zueinander verschiebbar angeordnet sind und teleskopartig zusammenwirken. Der dem ersten Steuerkolben (7, 14) abgewandte Teil des zweiten Steuerkolbens (11) wird im Gehäuse mittels Dichtringen (17, 20) abgedichtet geführt. Durch die teleskopartige Anordnung des ersten Steuerkolbens (7, 14) und des zweiten Steuerkolbens (11) zueinander wird eine zweite Steuerkammer (46) gebildet, welche von den einander zugewandten Seiten der beiden Steuerkolben (7, 14) und (11) begrenzt wird. Die zweite Steuerkammer (46) ist über einen im zweiten Steuerkolben (11) vorgesehenen Kanal (41) und einen zweiten Steueranschluß (40) mit einem zweiten Bremskreis des Motorfahrzeugs verbunden.

Zwischen der Wandung einer den außen liegenden ersten Steuerkolben (7, 14) führenden Gehäuseausnehmung und einer ringförmigen Wand (14) des ersten Steuerkolbens (7, 14) ist ein erstes Dichtelement angeordnet, welches dichtend an der Wandung (15) der den ersten Steuerkolben (7, 14) aufnehmenden und führenden Gehäuseausnehmung anliegt und ein Austreten von Druckmittel aus der ersten Steuerkammer (2) verhindert. Zwischen der dem zweiten Steuerkolben (11) zugewandten inneren Seite der rinförmigen Wand (14) des ersten Steuerkolbens (7, 14) und dem dieser Wand (14) zugewandten äußeren Rand des zweiten Steuerkolbens (11) ist ein zweites Dichtelement (12) angeordnet, welches ein Austreten von Druckmittel aus der zweiten Steuerkammer (46) verhindert.

Dadurch, daß zum einen der zweite Steuerkolben (11) gegen den ersten Steuerkolben (7, 14) abgedichtet ist und zum anderen der erste Steuerkolben (7, 14) gegen das Gehäuse eine Abdichtung erfährt, wird zuverlässig verhindert, daß sich die Drücke aus dem ersten Bremskreis und dem zweiten Bremskreis und somit die Drücke in der ersten Steuerkammer (2) und der zweiten Steuerkammer (46) vermischen. Der zweite Steuerkolben (11) begrenzt mit seiner dem ersten Steuerkolben (7, 14) abgewandten Wirkfläche eine Arbeitskammer (21), die über einen Druckmittelausgang (22) mit einer zu einem Anhänger-Bremsventil führenden Druckmittelleitung verbunden ist. Die dem ersten Steuerkolben (7, 14) abgewandte Wirkfläche des zweiten Steuerkolbens (11), welche die Arbeitskammer (21) begrenzt, ist durch eine Abstufung des zweiten Steuerkolbens (11) geteilt, wobei die so gebildete erste Teilfläche des zweiten Steuerkolbens (11), wie bereits gesagt, die Arbeitskammer (21) begrenzt, während die zweite Teilfläche des zweiten Steuerkolbens (11) als Begrenzung für eine als Hilfssteuerkammer dienende Teilkammer (47) dient. Der Dichtring (12) des zweiten Steuerkolbens (11) dichtet die zweite Steuerkammer (46) gegen die als Hilfssteuerkammer dienende Teilkammer (47), welche mit der Arbeitskammer (21) und damit mit dem Anhängerbremskreis verbindbar ist, direkt ab. Der Dichtring (13) des ersten Steuerkolbens (7, 14) dichtet die erste Steuerkammer (2) gegen die als Hilfssteuerkammer dienende Teilkammer (47) ab. Der Dichtring (17) des zweiten Steuerkolbens (11) dichtet die Teilkammer (47) gegen den zweiten Steueranschluß (40) und gegen die zweite Steuerkammer (46) ab. Eine Abdichtung der Arbeitskammer (21) gegen den zweiten Steueranschluß (40) und somit auch gegen die zweite Steuerkammer (46) erfolgt mittels des am zweiten Steuerkolben (11) angeordneten Dichtringes (20). Die beiden Steuerkolben (7, 14 und 11) sind in Abhängigkeit von dem jeweils zugeordneten Steuerdruck jeweils in gleicher Richtung bewegbar.

Das untere Gehäuseteil (30) ist gegen das obere Gehäuseteil (1) durch einen mit einer in Richtung seiner Längsachse verlaufenden Ausnehmung (49) sowie einem Dichtring (24) versehenen Kolben (23) abgeschlossen. Der Kolben (23) trennt eine mit einem Druckmitteleinlaß (26) verbundenen Druckmitteleinlaßkammer (25) von der Arbeitskammer (21). Der die Ausnehmung (49) des Kolbens (23) begrenzende Randbereich ist als Einlaßventilsitz (48) des Einlaßventils eines ersten kombinierten Einlaß- und Auslaßventils ausgebildet. Mit dem Einlaßventilsitz (48) wirkt ein Doppelventilkörper (37) zusammen, der auf seiner dem Einlaßventilsitz (48) abgewandten Seite einen hülsenförmigen Fortsatz (34) aufweist. Der mit dem Doppelventilkörper (37) verbundene hülsenförmige Fortsatz (34) wird in einem abgestuften Rohr 50 des Kolbens 23 abgedichtet geführt und mittels einer sich auf einem umlaufenden Vorsprung des Rohres 50 abstützenden Druckfeder 35 am Einlaßventil 48 zur Anlage gebracht. Das Rohr 50 wird einerseits in einer im unteren Gehäuseteil vorgesehenen ringförmigen Stirnwand 51, welche die Druckmitteleinlaßkammer 25 von einer Hilfsarbeitskammer 32 trennt, und andererseits in einer im Boden des unteren Gehäuseteiles 30 angeordneten Öffnung abgedichtet geführt. Die Hilfsarbeitskammer 32 wird von einem mit einem Dichtring 28 versehenen Kolben 29 begrenzt. Über einen Druckmittelanschluß 33 steht die Hilfsarbeitskammer 32 mit einem Handbremsventil des Motorfahrzeugs in Verbindung. Der zweite Steuerkolben 11 weist auf seiner der Arbeitskammer 21 zugewandten Seite einen Hohlstößel 52 auf, der in die Ausnehmung 49 des Kolbens 23 hineinragt und mit seinem als Auslaßventilsitz 38 ausgebildeten freien Ende mit dem Doppelventilkörper 37 das Auslaßventil 38, 37 des ersten kombinierten Einlaß- und Auslaßventils 48, 38, 37 bildet. Über das erste kombinierte Einlaß- und Auslaßventil 48, 38, 37 ist die Arbeitskammer 21 be- und entlüftbar. Der Hohlstößel 52 besitzt einen Einsatz 42, der sich in eine aus zwei Teilkammern 53 und 54 bestehende Kammer des zweiten Steuerkolbens 11 hineinerstreckt und an seinem in die Teilkammer 53 hineinragenden Ende als Auslaßventilsitz 55 für ein zweites kombiniertes Einlaß- und Auslaßventil ausgebildet ist. Ein mit einem Dichtring 9 versehener Betätigungskolben 6, der gegen die Kraft einer Feder 18 in Richtung auf den als Hohlstößel ausgebildeten Einsatz 42 zu verschiebbar in der Kammer 53 angeordnet ist, trennt die beiden Teilkammern 53, 54 voneinander. Der Betätigungskolben 6 weist eine zentrisch angeordnete Ausnehmung 5 auf, die einen sich radial nach innen erstreckenden, als Einlaßventilsitz 44 ausgebildeten umlaufenden Vorsprung besitzt. Auf dem Einlaßventilsitz 44 liegt ein von einer Feder 4 belasteter Doppelventilkörper 43 auf, der zusammen mit dem Einlaßventilsitz 44 das Einlaßventil 43, 44 und mit dem Auslaßventilsitz 55 das Auslaßventil 43, 55 des zweiten kombinierten Einlaß- und Auslaßventils 55, 43, 44 bildet. Die Kammer 54 des zweiten Steuerkolbens 11 ist mittels eines Deckels 3 und eines Dichtringes druckdicht gegen die zweite Steuerkammer 46 abgeschlossen. Der Deckel 3 wird von einem Sicherungsring gehalten. Ein im zweiten Steuerkolben 11 vorgesehener Kanal 10 verbindet die Arbeitskammer 21 mit der Teilkammer 54 des zweiten Steuerkolbens 11. Eine im zweiten Steuerkolben 11 angeordnete Bohrung 56 verbindet die Hilfssteuerkammer 47 mit der Teilkammer 53. Mittels einer sich auf einem Absatz des Gehäuseoberteiles 1 abstützenden Kegelfeder 16 wird der zweite Steuerkolben 11 in Richtung auf die zweite Steuerkammer 46 und den ersten Steuerkolben 7, 14 zu belastet. Der erste Steuerkolben 7, 14 wird mittels des zweiten Steuerkolbens 11 von der Kegelfeder 16 in Richtung auf die erste Steuerkammer 2 zu belastet.

Die Funktion des im vorstehenden beschriebenen Bremsdruck-Steuerventils wird nachstehend näher erläutert.

In der gezeigten Stellung sind die erste Steuerkammer 2 und die zweite Steuerkammer 46 drucklos und in der Druckmitteleinlaßkammer 25 steht Vorratsdruck an.

Wird das Motorwagen-Bremsventil vom Fahrer betätigt, so strömt Bremsdruck von einem ersten Betriebsbremskreis über den Steueranschluß 45 in die erste Steuerkammer 2. Gleichzeitig wird vom zweiten Bremskreis des Motorfahrzeugs über den zweiten Steueranschluß 40 und den im zweiten Steuerkolben 11 angeordneten Kanal 41 Druckmittel in die zweite Steuerkammer 46 eingesteuert. Da die die erste Steuerkammer 2 begrenzende Wirkfläche und die die zweite Steuerkammer 46 begrenzende Wirkfläche des ersten Steuerkolbens 7, 14 annähernd gleich groß sind und auch die einander entgegengerichtet auf den ersten Steuerkolben 7, 14 einwirkenden Drücke in der ersten Steuerkammer 2 und in der zweiten Steuerkammer 46 gleich groß sind, verändert sich die Lage des ersten Steuerkolbens 7, 14 nicht. Der sich in der ersten Steuerkammer 2 aufbauende Druck bewegt den ersten Steuerkolben 7, 14 abwärts in Richtung auf die Arbeitskammer 21 zu und nimmt dabei den zweiten Steuerkolben 11 mit. Dabei setzt der Auslaßventilsitz 38 des ersten kombinierten Einlaß- und Auslaßventils 37, 48, 38 auf dem Doppelventilkörper 37 auf. Das Auslaßventil 37, 38 ist jetzt geschlossen und die Verbindung von der Arbeitskammer 21 zur Atmosphäre unterbrochen. Bei der weiteren Abwärtsbewegung des ersten Steuerkolbens 7, 14 und des zweiten Steuerkolbens 11 wird der Doppelventilkörper 37 vom Einlaßventil 48 abgehoben und so das Einlaßventil 48, 37 des ersten kombinierten Einlaß- und Auslaßventils 48, 37, 38 in die Offenstellung gebracht. Von der Druckmitteleinlaßkammer 25 strömt Vorratsdruckluft durch das geöffnete Einlaßventil 37, 48 in die Arbeitskammer 21 und weiter durch den Druckmittelausgang 22 zur Steuerkammer des Anhänger-Bremsventils des Anhänger-Fahrzeugs.

In der Steuerkammer des Anhänger-Bremsventils steigt der Druck mit einer gegenüber dem Druckanstieg in der Bremsanlage des Motorfahrzeugs steileren Steigung an.

Fällt durch einen Defekt der erste Betriebsbremskreis aus, so erfolgt über den zweiten Betriebsbremskreis nur eine Belüftung des Steueranschlusses 40. Der dabei in der zweiten Steuerkammer 46 sich aufbauende Druck bewegt den zweiten Steuerkolben 11 wie vorstehend beschrieben nach unten in Richtung auf die Arbeitskammer 21 zu. Der erste Steuerkolben 7, 14 verbleibt dabei in seiner Ausgangslage, d.h., er liegt mit seinem ringförmigen Vorsprung 8 am Boden des Gehäuseoberteiles 1 an. Dabei schließt der zweite Steuerkolben 11 das Auslaßventil 38, 37 und öffnet das Einlaßventil 37, 48, so daß die der Motorwagenbremsung entsprechende Belüftung der Anhänger-Bremsleitung stattfindet. Fällt der zweite Betriebsbremskreis aus, so wird über den ersten Betriebsbremskreis ausschließlich die erste Steuerkammer 2 belüftet. Die zweite Steuerkammer 46 ist drucklos und der zweite Steuerkolben 11 wird mittels der Kraft der Feder 16 am Boden 7 des ersten Steuerkolbens 7, 14 zur Anlage gebracht. Der sich in der ersten Steuerkammer 2 aufbauende Druck verschiebt den ersten Steuerkolben 7, 14 und mit diesem den zweiten Steuerkolben 11 in Richtung auf die Arbeitskammer 21 zu. Das Schließen des Auslaßventils 38, 37 und das Öffnen des Einlaßventils 48, 37 erfolgt dann wie vorstehend beschrieben.

Sowohl bei einem intakten Bremskreis als auch bei zwei intakten Bremskreisen gelangt durch den im zweiten Steuerkolben 11 angeordneten Kanal 10 aus der Arbeitskammer 21 Druckluft in die obere Teilkammer 54 des zweiten Steuerkolbens 11 und beaufschlagt die Wirkfläche des Betätigungskolbens 6. Ist der Druck in der Arbeitskammer 21 und somit auch in der Teilkammer 54 soweit angestiegen, daß die Kraft der den Betätigungskolben 6 belastenden, der Kraft des Druckes in der Teilkammer 54 entgegengerichteten Feder 18 überwunden wird, so bewegt sich der Betätigungskolben 6 abwärts in Richtung auf die Teilkammer 53 zu. Der Doppelventilkörper 43 setzt auf den Auslaßventilsitz 55 auf. Das Auslaßventil 43, 55 des zweiten kombinierten Einlaß- und Auslaßventils 43, 55, 44 ist jetzt geschlossen. Bei der weiteren Abwärtsbewegung des Betätigungskolbens 6 wird der Doppelventilkörper 43 vom Einlaßventilsitz 44 abgehoben und so das Einlaßventil 43, 44 des zweiten kombinierten Einlaß-Auslaßventils 43, 44, 55 geöffnet. Durch das geöffnete Einlaßventil 43, 44 sowie die Bohrung 56 gelangt die Druckluft aus der Arbeitskammer 21 gemindert in die als Hilfssteuerkammer dienende Teilkammer 47 und beaufschlagt die zweite Teilfläche des zweiten Steuerkolbens 11. Die zweite, von diesem Druck beaufschlagte Teilfläche und die erste, die Arbeitskammer 21 begrenzende Teilfläche des zweiten Steuerkolbens 11 bilden zusammen eine gemeinsame Wirkfläche, die der Größe der entgegengerichteten, vom Steuerdruck beaufschlagten Wirkfläche des ersten Steuerkolbens 7, 14 entspricht, welcher mit dem zweiten Steuerkolben 11 zusammenwirkt. Ist der Druck in der Teilkammer 47 und somit auch in der Teilkammer 53 soweit angestiegen, daß die vom Druck in der Teilkammer 53 sowie die von der Feder 18 auf den Betätigungskolben 6 ausgeübte Kraft gleich ist der vom Druck in der Teilkammer 54 auf den Betätigungskolben 6 einwirkenden entgegengerichteten Kraft, gelangt das Einlaßventil 43, 44 des zweiten kombinierten Einlaß- und Auslaßventils 43, 44, 55 in die Schließstellung. In der Steuerkammer des nachgeschalteten Anhänger-Bremsventils steigt der Druck jetzt mit einer Steigung weiter an, die parallel zur Steigung des Druckanstiegs in der Bremsanlage des Motorfahrzeugs verläuft.

Aufgrund der gegeneinander gerichteten gleich großen Wirkfläche des ersten Steuerkolbens 7, 14 wird ein parallel zum Druckanstieg des Steuerdrucks (Bremsdruck des Motorfahrzeugs) verlaufender, jedoch um den Betrag der Voreilung erhöhter Druck ausgesteuert. Ist die aus den beiden Teilflächen gebildete Gesamtwirkfläche kleiner oder größer als die entgegengerichtete vom Steuerdruck beaufschlagte Wirkfläche ausgelegt, so wird ein höherer bzw. niedrigerer Druck angesteuert.

Soll der Bremsdruck in den Radbremszylindern des Anhänger-Fahrzeugs abgesenkt oder ganz abgebaut werden, so wird der Steuerdruck in den Steuerkammern 2 und 46 reduziert. Aufgrund der dabei entstehenden Druckdifferenzen zwischen dem Druck in den Steuerkammern 2, 46 und dem Druck in der Arbeitskammer 21 sowie der als Hilfssteuerkammer dienenden Teilkammer 47 bewegen sich der zweite Steuerkolben 11 und der erste Steuerkolben 7, 14 nach oben in Richtung auf den Boden des Gehäuseoberteiles 1 zu. Der Auslaßventilsitz 38 hebt vom Doppelventilkörper 37 ab, so daß sich das Auslaßventil 38, 37 des ersten kombinierten Einlaß- und Auslaßventils 38, 37, 48 jetzt in der Offenstellung befindet. Die Arbeitskammer 21 des Anhänger-Steuerventils und somit auch die Steuerkammer des Anhänger-Bremsventils des Anhänger-Fahrzeugs werden über das Auslaßventil 38, 37 und den Entlüftungsanschluß 31 zur Atmosphäre hin entlüftet.

Bedingt durch den Druckabbau in der Arbeitskammer 21 sinkt auch der Druck in der vom Betätigungskolben 6 begrenzten Teilkammer 54 des zweiten Steuerkolbens 11. Der Betätigungskolben 6 wird durch die dabei entstehende Druckdifferenz zwischen dem Druck in der Teilkammer 53 und dem Druck in der Teilkammer 54 sowie die Kraft der Feder 18 nach oben in Richtung auf die Teilkammer 54 zu verschoben, wodurch ein Abheben des Doppelventilkörpers 43 vom Auslaßventilsitz 55 des zweiten kombinierten Einlaß- und Auslaßventils 43, 44, 55 bewirkt wird. Die als Hilfssteuerkammer dienende Teilkammer 47 wird über die Bohrung 56, die Teilkammer 53, das Auslaßventil 55, 43 sowie den Einsatz 42 und den Entlüftungsanschluß 31 direkt zur Atmosphäre hin entlüftet.

Dadurch, daß die Hilfssteuerkammer 7 nicht mehr in Abhängigkeit vom Druckabbauverlauf in der Arbeitskammer 21, sondern direkt zur Atmosphäre hin entlüftet wird, und dadurch, daß der Druckabbau in dieser Teilkammer 47 in Abhängigkeit gebracht wird von der Kraft der die Voreilung beeinflussenden Feder 18, zeigt die Druckabbau-Kennlinie im wesentlichen gleichen Verlauf wie die Druckaufbau-Kennlinie. Dies bedeutet eine Verringerung der Hysterese des Anhänger-Steuerventils.

Der im Hohlstößel 52 des zweiten Steuerkolbens 11 angeordnete Einsatz 42, 19 ist in Richtung seiner Längsachse verstellbar, so daß der vom Betätigungskolben 6 zur Betätigung des Einlaß- bzw. Auslaßventils des zweiten kombinierten Einlaß- und Auslaßventils 55, 43, 44 zurückzulegende Weg und somit auch die Vorspannung der Feder 18 veränderbar ist.

Durch diese Maßnahme kann die Voreilung des Bremsdruckaufbaus in den Radbremszylindern des Anhänger-Fahrzeugs gegenüber dem Bremsdruckaufbau in den Radbremszylindern des Motor-Fahrzeugs auf jeden gewünschten Wert eingestellt werden.

**Patentansprüche**

1. Zweikreisig ansteuerbares Bremsdruck-Steuerventil für druckluftbetätigte Fahrzeug-Bremsanlagen, insbesondere Anhänger-Steuerventil, mit folgenden Merkmalen:
a) es ist ein von einem Steuerdruck aus einem ersten Bremskreis beaufschlagbarer erster Steuerkolben (7, 14) vorgesehen, der eine erste Steuerkammer (2) begrenzt;

b) es ist ein von einem Steuerdruck aus einem zweiten Bremskreis beaufschlagbarer, relativ zum ersten Steuerkolben (7, 14) bewegbarer zweiter Steuerkolben (11) vorgesehen, der eine zweite Steuerkammer (46) begrenzt und der so angeordnet ist, daß die beiden Steuerkolben (7, 14, 11) in Abhängigkeit von dem jeweils zugeordneten Steuerdruck jeweils in gleicher Richtung bewegbar sind;

c) es ist ein kombiniertes Einlaß- und Auslaßventil (37, 38, 48) vorgesehen, das zur wahlweisen Verbindung einer Druckmitteleinlaßkammer (25) mit einer Arbeitskammer (21) sowie mit einem mit der Arbeitskammer (21) verbundenen, zum Anhängerbremskreis führenden Druckmittelausgang (22) oder mit einem Entlüftungsanschluß (31) dient;

d) das kombinierte Einlaß- und Auslaßventil (37, 38, 48) ist jeweils in Abhängigkeit vom Steuerdruck von wenigstens einem der beiden Steuerkolben (7, 14; 11) betätigbar;

e) die beiden Steuerkolben (7, 14; 11) sind teleskopartig und relativ zueinander verschiebbar angeordnet;

f) zwischen der Wandung einer den außenliegenden ersten Steuerkolben (7, 14) führenden Gehäuseausnehmung und einer ringförmigen Wand des außenliegenden ersten Steuerkolbens (7, 14) ist ein erstes Dichtelement (13) angeordnet, welches die vom außenliegenden ersten Steuerkolben (7, 14) begrenzte erste Steuerkammer (2) abdichtet;

g) die zweite Steuerkammer (46) ist gegen eine Teilkammer (47), welche mit der Arbeitskammer (21) und damit mit dem Anhängerbremskreis verbindbar ist, über ein zweites Dichtelement (12) direkt abgedichtet;

gekennzeichnet durch die folgenden Merkmale:

h) zwischen der dem zweiten Steuerkolben (11) zugewandten inneren Seite der ringförmigen Wand (14) des ersten Steuerkolbens (7, 14) und dem dieser Wand (14) zugewandten äußeren Rand des zweiten Steuerkolbens (11) ist das zweite Dichtelement (12) angeordnet, welches ein Austreten von Druckmittel aus der zweiten Steuerkammer (40) verhindert;

i) beide Steuerkammern (2, 46) sind jeweils über das zugehörige Dichtelement (12, 13) unmittelbar gegenüber der Teilkammer (47) abgedichtet.

2. Zweikreisig ansteuerbares Bremsdruck-Steuerventil nach Anspruch 1, gekennzeichnet durch die folgenden Merkmale:

a) der außen liegende erste Steuerkolben (7, 14) ist einstückig ausgebildet;

b) der außen liegende erste Steuerkolben (7, 14) ist topfförmig ausgebildet.

3. Zweikreisig ansteuerbares Bremsdruck-Steuerventil nach wenigstens einem der vorhergehenden Ansprüche, dadurch gekennzeichnet, daß der von dem mit dem zweiten Bremskreis verbundenen Steueranschluß (40) zu der zweiten Steuerkammer (46) führende Kanal (41) im zweiten Steuerkolben (11) angeordnet ist.

4. Zweikreisig ansteuerbares Bremsdruck-Steuerventil nach Anspruch 1, gekennzeichnet durch die folgenden Merkmale:

a) diejenige Kolbenfläche des innen liegenden zweiten Steuerkolbens (11), die der vom Steuerdruck in wenigstens einer der Steuerkammern (2, 46) beaufschlagten Kolbenfläche des zweiten Steuerkolbens (11) bzw. des ersten Steuerkolbens (7, 14) gegenüberliegt, ist geteilt ausgebildet, wobei die so gebildete erste Teilfläche des zweiten Steuerkolbens (11) vom ausgesteuerten Druck in der Arbeitskammer (21) beaufschlagt ist, während die zweite Teilfläche des zweiten Steuerkolbens (11) von dem in einer von der Teilkammer gebildeten Hilfssteuerkammer (47) herrschenden Druck beaufschlagt ist;

b) die Hilfssteuerkammer (47) ist über ein weiteres kombiniertes Einlaß- und Auslaßventil (55, 43, 44) be- und entlüftbar, wobei das Einlaßventil (44, 33) des zweiten kombinierten Einlaß- und Auslaßventils (55, 43, 44) zur Beaufschlagung der Hilfssteuerkammer (47) mit einem vom Steuerdruck abhängigen Druck dient;

c) das Auslaßventil (55, 43) des zweiten kombinierten Einlaß- und Auslaßventils (55, 43, 44) ist so ausgebildet und so angeordnet, daß die Entlüftung der Hilfssteuerkammer (47) direkt zur Atmosphäre hin erfolgt.

5. Zweikreisig ansteuerbares Bremsdruck-Steuerventil nach wenigstens einem der vorhergehenden Ansprüche, dadurch gekennzeichnet, daß zur Abdichtung des zweiten Steueranschlusses (40) gegen die Arbeitskammer (21) ein erster Dichtring (20) und zur Abdichtung des zweiten Steueranschlusses (40) gegen die Hilfssteuerkammer (47) ein zweiter Dichtring (17) vorgesehen ist.

**Claims**

1. Dual-circuit-controllable brake pressure control valve for compressed air-operated vehicle brake systems, in particular a trailer control valve, having the following features:

a) there is provided a first control piston (7, 14) which bounds a first control chamber (2) and is loaded by a control pressure from a first brake circuit;

b) there is provided a second control piston (11) which bounds a second control chamber (46) and is movable relative to the first control piston (7, 14) and is loaded by a control pressure from a second brake circuit, and is so arranged that the two control pistons (7, 14, 11) are each movable in the same direction in dependence on the respective associated control pressures;

c) there is provided a combined inlet and outlet valve (37, 38, 48) which serves for the selective connection of a pressure medium inlet chamber (25) to a working chamber (21) and also to a pressure medium outlet (22) connected to the working chamber (21) and leading to the trailer brake circuit, or to a venting port (31);

d) the combined inlet and outlet valve (37, 38, 48) is arranged to be operated in each case in dependence on the control pressure of at least one of the two control pistons (7, 14; 11);

e) the two control pistons (7, 14; 11) are arranged to telescope together and so that they can be displaced relative to one another;

f) between the wall of a housing aperture guiding the outermost, first control piston (7, 14) and an annular wall of the outermost first control piston (7, 14) there is arranged a first sealing element (13) which seals the first control chamber (2) bounded by the outermost first control piston (7, 14);

g) the second control chamber (46) is sealed directly from a partial chamber (47), which can be connected to the working chamber (21) and thus to the trailer brake circuit, by means of a second sealing element (12);

characterized by the following features:

h) between the inner side of the annular wall (14), facing the second control piston (11), of the first control piston (7, 14) and the outer edge of the second control piston (11) facing this wall (14) there is arranged the second sealing element (12) which prevents escape of pressure medium from the second control chamber (46);

i) both control chambers (2, 46) are sealed directly from the partial chamber (47) by respective associated sealing elements (12, 13).

2. Dual-circuit-controllable brake pressure control valve according to claim 1, characterized by the following features:

a) the outermost first control piston (7, 14) i8 of one-piece construction;

b) the outermost first control piston (7, 14 ) is of cup-shaped construction.

3. Dual-circuit-controllable brake pressure control valve according to at least one of the preceding claims, characterized in that the channel (41) leading to the second control chamber (46) from the control port (40) connected to the second brake circuit is arranged in the second control piston (11).

4. Dual-circuit-controllable brake pressure control valve according to claim 1, characterized by the following features:

a) the piston face of the innermost second control piston (11) which lies opposite the piston face of the second control piston (11) and of the first control piston (7, 14) loaded by the control pressure in at least one of the control chambers (2, 46) is of divided construction, the first partial face thus formed of the second control piston (11) being loaded by the pressure controlled in the working chamber (21) and the second partial face of the second piston (11) being loaded by the pressure prevailing in an auxiliary control chamber (47) formed by the partial chamber;

b) the auxiliary control chamber (47) can be pressurized and vented by way of a further combined inlet and outlet valve (55, 43, 44), the inlet valve (44, 33) of the second combined inlet and outlet valve (55, 43, 44 ) serving to pressurize the auxiliary control chamber (47) with a pressure dependent on the control pressure;

c) the outlet valve (55, 43) of the second combined inlet and outlet valve (55, 43, 44) is constructed and arranged so that the venting of the auxiliary control chamber (47) is effected directly to the atmosphere.

5. Dual-circuit-controllable brake pressure control valve according to at least one of the preceding claims, characterized in that to seal the second control port (40) from the working chamber (21) there is provided a first sealing ring (20), and to seal the second control port (40) from the auxiliary control chamber (47) there is provided a second sealing ring (17).

**Revendications**

1. Vanne de commande de la pression de freinage, pouvant être établie par deux circuits, pour des installations de freinage de véhicule manœuvrées par l'air comprimé, en particulier vanne de commande de remorque, présentant les caractéristiques suivantes:

a) il est prévu un premier piston de commande (7, 14) qui peut être contraint par une pression de commande provenant d'un premier circuit de freinage et qui limite une première chambre de commande (2);

b) il est prévu un second piston de commande (11) qui peut être contraint par une pression de commande provenant d'un second circuit de freinage, qui peut se déplacer par rapport au premier piston de commande (7, 14), qui limite une seconde chambre de commande (46) qui est disposée de façon que les deux pistons de commande (7, 14, 11) puissent se déplacer respectivement dans la même direction en fonction de la pression de commande respectivement correspondante;

c) il est prévu une soupape combinée d'entrée et de sortie (37, 38, 48) qui sert à relier, au choix, une chambre d'entrée (25) du fluide sous pression avec une chambre de travail (21) ainsi qu'avec une sortie (22) du fluide sous pression reliée à la chambre de travail (21) et conduisant au circuit de freinage de la remorque, ou bien avec un raccord de mise hors pression (31);

d) la soupape combinée d'entrée et de sortie (37, 38, 48) peut être respectivement manœuvrée en fonction de la pression de commande par au moins l'un des deux pistons de commande (7, 14; 11);

e) les deux pistons de commande (7, 14; 11) sont disposés avec liberté de coulisser télescopiquement relativement l'un à l'autre;

f) entre la paroi d'un évidement du carter qui guide le premier piston de commande (7, 14) situé à l'extérieur et une paroi annulaire du premier piston de commande (7, 14) situé à l'extérieur est disposé un premier élément d'etanchéité (13) qui assure l'étanchéité de la première chambre de commande (2) limitée par le premier piston de commande (7, 14) situé à l'extérieur;

g) la seconde chambre de commande (46) est directement rendue étanche, par l'intermédiaire d'un second élément d'etanchéité (12), à l'égard d'une chambre partielle (47) qui peut être reliée avec la chambre de travail (21) et donc avec le circuit de freinage de la remorque;
caractérisée par les caractéristiques suivantes:

h) entre la face intérieure, orientée vers le second piston de commande (11), de la paroi annulaire (14) du premier piston de commande (7, 14) et le bord extérieur, orienté vers cette paroi (14), du second piston de commande (11) est disposé le second élément d'étanchéité (12) qui interdit une sortie du fluide sous pression hors de la seconde chambre de commande (46);

i) les deux chambres de commande (2, 46) sont respectivement et directement rendues étanches par rapport à la chambre partielle (47) par l'intermédiaire de l'élément d'étanchéité correspondant (12, 13).

2. Vanne de commande de la pression de freinage, pouvant être commandée par deux circuits, selon la revendication 1, caractérisée par les caractéristiques suivantes:

a) le premier piston de commande (7, 14), situé à l'extérieur, est connu d'une seule pièce;

b) le premier piston de commande (7, 14), situé à l'extérieur, est conçu en forme de boisseau.

3. Vanne de commande de la pression de freinage, pouvant être établie par deux circuits, selon au moins l'une des revendications précédentes, caractérisée par le fait que le canal (41) qui conduit, du raccord de commande (40) relié au second freinage, à la seconde chambre de commande (46), est disposé dans le second piston de commande (11).

4. Vanne de commande de la pression de freinage, pouvant être établie par deux circuits, selon la revendication 1, caractérisée par les caractéristiques suivantes:

a) la surface de piston du second piston de commande (11), situé à l'intérieur, qui se trouve en face de la surface du second piston de commande (11) et le premier piston de commande (7, 14) contrainte par la pression de commande régnant dans au moins l'une des chambres de commande (2, 46) est conçue divisée, étant précisé que la première surface partielle, ainsi formée, du second piston de commande (11) est contrainte par la pression établie dans la chambre de travail (21), tandis que la seconde surface partielle du second piston de commande (11) est contrainte par la pression régnant dans une chambre auxiliaire de commande (47) formée par la chambre partielle;

b) la chambre auxiliaire de commande (47) peut être mise sous pression ou hors pression par l'intermédiaire d'une autre soupape combinée d'entrée et de sortie (55, 43, 44), étant précisé que la soupape d'entrée (44, 33) de la seconde soupape combinée d'entrée et de sortie (55, 43, 44) sert à contraindre la chambre auxiliaire de commande (47) avec une pression qui est fonction de la pression de commande;

c) la soupape de sortie (55, 43) de la seconde combinée d'entrée et de sortie (55, 43, 44) est conçue et disposée de façon que la mise hors pression de la chambre auxiliaire de commande (47) se fasse directement à l'atmosphère.

5. Vanne de commande de la pression de freinage, pouvant être établie par deux circuits, selon au moins l'une des revendications précédentes, caractérisée par le fait qu'une première garniture d'étanchéité annulaire (20) est prévue pour assurer l'étanchéité du second raccord de commande (40) à l'égard de la chambre de travail (21) et qu'une seconde garniture d'étanchéité annulaire (17) est prévue pour assurer l'étanchéité du second raccord de commande (40) à l'égard de la chambre auxiliaire de travail (47).